# EUROPEAN PATENT SPECIFICATION

(11) **EP 2 322 268 B1**
(45) Date of publication and mention of the grant of the patent: **04.01.2017**
(21) Application number: 10004977.4
(22) Date of filing: 11.05.2010
(51) Int. Cl.: B01D 61/18, B01D 63/08, C02F 1/44

(54) **Immersion type membrane separator device**
Membrantrennvorrichtung für den Tauchbetrieb
Dispositif de séparateur de membrane de type à immersion

(30) Priority: 03.11.2009 KR 20090105395; 06.11.2009 KR 20090106924; 23.11.2009 KR 20090113314
(43) Date of publication of application: 18.05.2011
(73) Proprietor: LG Electronics Inc., Yeongdeungpo-gu Seoul 150-721 (KR)
(72) Inventor: Lee, Sanghoon, Cheongju-si Chungcheongbuk-do 361-480 (KR); Kim, Incheol, Cheongju-si Chungcheongbuk-do 361-480 (KR); Choi, Woong, Cheongju-si Chungcheongbuk-do 361-480 (KR); Lim, Jungmin, Cheongju-si Chungcheongbuk-do 361-480 (KR)
(74) Representative: Katérle, Axel

(56) References cited:
- EP-A1- 1 338 328
- EP-A1- 1 475 142
- EP-A1- 2 011 561
- EP-A2- 1 911 509
- WO-A1-2009/109308
- JP-A- 7 299 339
- US-A1- 2003 010 690

## Description

This application claims the benefit of Korean Patent Application No. 10-2009-0105395 filed on November 3, No. 10-2009-0106924 filed on November 6, and No. 10-2009-0113314 filed on November 23 which is hereby incorporated by reference.

### BACKGROUND OF THE INVENTION

### Field of the Invention

Exemplary embodiments of the invention relate to an immersion type membrane separation device.

### Description of the Related Art

Membrane is a phase capable of separating only a specific ingredient from a gas, a liquid, a solid, or a combination thereof and is able to separate molecular substance from the combination using physical and chemical properties of the membrane.

In a water treatment field, the membrane may be classified into porous membrane, microporous membrane, and homogeneous membrane based on a structure of the membrane. Further, the membrane may be classified into microfiltration membrane, ultrafiltration (UF) membrane, reverse osmosis membrane, gas separation membrane, and pervaporation membrane based on a use of the membrane.

It is generally difficult to individually use the membrane. Thus, the membrane may be manufactured as a device, so that the membrane can be used in a separation process. An equipment manufactured using the membrane is called a module.

A plate and frame type module, a tubular type module, an UF membrane module, etc. have been commercially used based on a membrane type. A pressure type UF membrane and an immersion type UF membrane are used in the UF membrane module, and a pressure type tubular membrane is used in the tubular type module.

In the pressure type UF membrane and the pressure type tubular membrane used in the UF membrane module and the tubular type module, a linear velocity inside the membrane has to be kept at a predetermined velocity so as to reduce a pollution of the membrane. However, much power cost is required to keep the linear velocity at the predetermined velocity. The surface of the immersion type UF membrane contacts air bubbles in the water, thereby reducing a pollution of the membrane. However, the immersion type UF membrane contacts pollution substances on a fiber, and thus the immersion type UF membrane is damaged.

A separation membrane indicates a membrane formed on a plane or sheet. Pollution substances are hardly attached to the separation membrane, or the pollution substances is easily removed even if the pollution substances are attached to the separation membrane. Thus, the separation membrane is hardly damaged during a drive of the membrane module, compared with the UF membrane. However, unlike the UF membrane, it is impossible to clean the separation membrane through a backwashing process.

Document US 2003/0010690 A1 shows a multistage immersion type membrane separator. The membrane separator has a filtration part and an air diffuser disposed below the filtration part. In the filtration part, a plurality of plate-like membrane cartridges are disposed. The air diffuser has a diffuser case and a diffuser tube disposed sidewardly. The diffuser tube has in its lower part a plurality of blow holes and is connected at one end to an air supply pipe. During normal air diffusion operation, air is supplied from the blower and blown off from the blow holes of the diffuser tube. In each plate-like membrane cartridge, a wall piece part having a predetermined height is formed on one side edge portion of the front and rear surfaces of the membrane cartridge. A groove-like concave portion is formed in the wall piece part. In the other side edge part of the front and rear surfaces of the membrane cartridge, a rigid-like convex portion is formed at the back of the wall piece part. In a filtration unit, plural plate-like membrane cartridges are arranged in parallel, wherein the wall piece part of each plate-like membrane cartridge is in contact with the side edge portion of the adjacent plate-like membrane cartridge, and the opposed concave portion and convex portion of the wall piece part are in engagement. The rigid-like convex portion is a protrusion of cuboid form having square edges.

Document EP 1 338 328 A1 shows an immersion type membrane filter apparatus including a filtration membrane module and an air bubbles supply device disposed there below. The air bubbles supply device comprises a first pipe connected to an air supply device such as an air compressor that supplies air to the first pipe. Air bubbles are supplied to the filtration membrane from the air bubbles supply device. The filtration membrane module is equipped with a cylindrical housing vessel and a group of tubular membranes are packed in this housing vessel. Each tubular membrane is cylindrically formed and has a protrusion continuously formed in a helical fashion on the outer periphery of the tubular membrane. This protrusion prevents the tubular membranes from coming in contact with each other in the group of tubular membranes.

Document EP 1 911 509 A2 describes a membrane separator assembly comprising a membrane module unit and a gas diffuser. The membrane module unit includes a plurality of parallel-arranged flat-type membrane modules. The gas diffuser is provided below the membrane module unit and arranged to diffuse a gas. Gas is fed to the diffuser via blower and is discharged from gas discharge ports of the gas diffuser, thereby generating a bubbles. Clearances between membrane fixing members of adjacent modules can be reduced by providing laterally extending projections. Each of the membrane fixing member can contain a plurality of laterally extending projections.

Document EP 2 011 561 A1 shows a membrane module produced by combining a membrane unit using a plurality of membrane elements with an air diffuser. The membrane element is configured by installing a filtering membrane on both surfaces of a plate-like supporting plate, and spacer parts for keeping a distance to an adjacent membrane element are formed on both sides of the supporting plate. The spacer part has protection parts and reception parts for fitting, wherein one projection part of one membrane element is fitting in reception parts of an adjacent membrane element. The membrane unit is used as a membrane module by installing the air diffuser for jetting air under the unit. A plurality of pipes are installed under the membrane elements and air diffusion holes are formed in the pipes.

Document JP 072 99 339 A shows a plurality of plate-shaped filter membranes with engaging parts and assembling parts to be engaged in order to assemble the membranes in a parallel-arranged state. The engaging part is a protrusion of cuboid-like form having square edges. Document WO 2009/109308 A1 shows a filtration device with a flat filter module comprising a plurality of parallel-arranged flat filter elements. Below the module vent pipes are arranged, which are connected to a compressed-air supply.

Document EP 1 475 142 A1 describes a filtering unit having a plurality of membrane plates, which are parallel-arranged and covering each other. Adjacent membrane plates are connected to each other in a force-fit way by use of tongue and groove connections arranged along longitudinal edges of the membrane plate. The tongue groove connections are formed as force-fit snapping connections. The tongue of the tongue and groove connection is a protrusion of cuboid form having square edges.

### SUMMARY OF THE INVENTION

The invention relates to an immersion type membrane separation device according to claim 1. Exemplary embodiments of the invention provide an immersion type membrane separation device with excellent membrane separation efficiency capable of simultaneously performing a diffusing operation and a flushing operation using one pipe and combining a plurality of membrane modules with one another.

In one aspect, there is an immersion type membrane separation device comprising a membrane module case including a plurality of membrane modules, a diffuser case positioned under the membrane module case, the diffuser case including a diffuser, and a supply unit for supplying air to the diffuser, the supply unit including a pipe connected to the diffuser, wherein air is supplied to the diffuser through the pipe, and a wastewater existing in the pipe is discharged through the diffuser.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 illustrates an immersion type membrane separation device according to an exemplary embodiment of the invention;
FIGs. 2 and 3 are lateral views of the immersion type membrane separation device shown in FIG. 1;
FIG. 4 illustrates a membrane module according to an exemplary embodiment of the invention;
FIG. 5 illustrates a membrane part of a membrane module according to an exemplary embodiment of the invention;
FIG. 6 illustrates an engaged form of protrusions and grooves of a membrane module according to an exemplary embodiment of the invention;
FIG. 7 illustrates membrane not in accordance with the invention;
FIG. 8 illustrates an engaged form of protrusions and grooves of another membrane module not in accordance with the invention;
FIG. 9 illustrates another membrane module not in accordance with the invention;
FIG. 10 illustrates an engaged form of protrusions and grooves of another membrane module not in accordance with the invention;
FIG. 11 illustrates an assembly of a plurality of membrane modules according to an exemplary embodiment of the invention;
FIG. 12 is a top plane view of an immersion type membrane separation device according to an exemplary embodiment of the invention;
FIG. 13 illustrates a combined form of a plurality of membrane modules and a membrane module case;
FIG. 14 is a front view of an immersion type membrane separation device according to an exemplary embodiment of the invention;
FIG. 15 illustrates a membrane module and a diffuser;
FIG. 16 is a lateral view of an immersion type membrane separation device according to an exemplary embodiment of the invention; and
FIGs. 17A and 17B illustrate a circulation of a wastewater in an aeration tank.

### DETAILED DESCRIPTION OF THE EMBODIMENTS

Reference will now be made in detail embodiments of the invention examples of which are illustrated in the accompanying drawings.

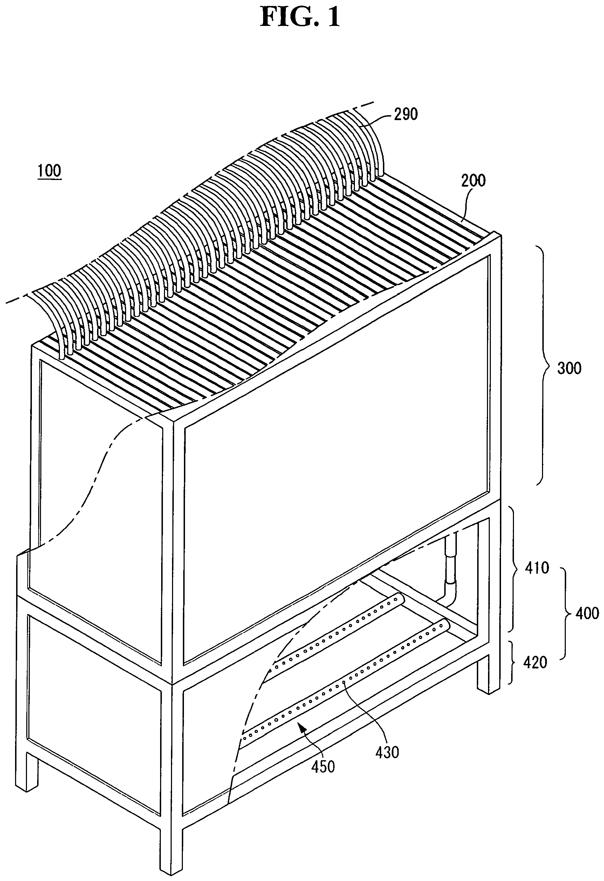

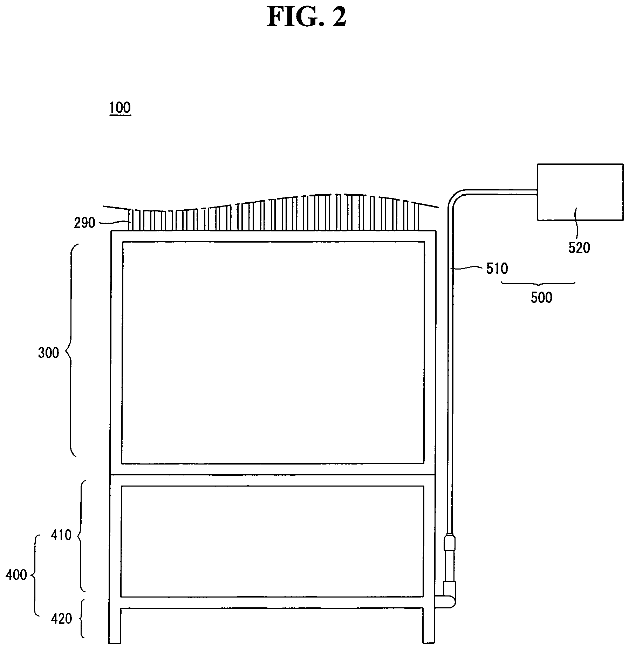

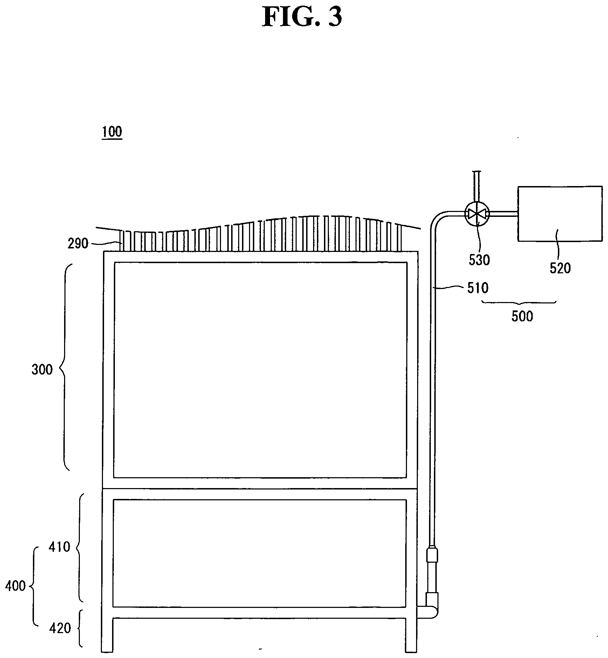

FIG. 1 illustrates an immersion type membrane separation device according to an exemplary embodiment of the invention. FIGs. 2 and 3 are lateral views of the immersion type membrane separation device shown in FIG. 1.

As shown in FIGs. 1 and 2, an immersion type membrane separation device 100 according to an exemplary embodiment of the invention may include a membrane module case 300 including a plurality of membrane modules 200, a diffuser case 400 that is positioned under the membrane module case 300 and includes a diffuser 450 having a plurality of air holes 430, and a supply unit 500 that is connected to the diffuser 450 and supplies air to the diffuser 450 through a pipe 510. More specifically, the membrane module case 300 may be a rectangular housing, whose an upper part and a lower part are opened. The plurality of membrane modules 200 may be combined with one another and received in an empty space of the membrane module case 300.

Each of the membrane modules 200 may be combined with a suction tube 290, and water cleaned through a membrane separation of the membrane modules 200 may be discharged to the outside through the suction tubes 290.

The diffuser case 400 positioned under the membrane module case 300 may form an integral body along with the membrane module case 300 and may be a rectangular housing, whose an upper part and a lower part are opened. The diffuser case 400 may further include a cavity 410 and a plurality of legs 420. The cavity 410 may be an empty space so that a wastewater flowing from a lower part of the immersion type membrane separation device 100 moves to the membrane module case 300. The legs 420 may allow the immersion type membrane separation device 100 to safely reach to the bottom and may provide an interval between the diffuser case 400 and the bottom so that the wastewater flows from the lower part of the immersion type membrane separation device 100. The legs 420 may include at least four legs. The entire area of the diffuser case 400 except the legs 420 may be opened.

The diffuser 450 of the diffuser case 400 may diffuse air in an aeration tank to the membrane module case 300. The diffuser 450 is positioned between the cavity 410 and the legs 420. The diffuser 450 may be connected to an air tube connected to the outside, thereby diffusing and moving air from the diffuser case 400 to the membrane module case 300. The diffuser 450 having the plurality of air holes 430 is positioned inside the diffuser case 400.

The supply unit 500 injects air into the diffuser 450. The supply unit 500 includes the pipe 510 connected to the diffuser 450 and a supply part 520 connected to an end of the pipe 510.

In the embodiment of the invention, the pipe 510 may use one pipe. The pipe 510 may connect the supply part 520 positioned to the outside to the diffuser 450 when the immersion type membrane separation device 100 is immersed in the aeration tank filled with the wastewater. Thus, the pipe 510 may serve as a path for supplying air supplied from the supply part 520 to the diffuser 450.

The supply part 520 may use a pump or a blower. The pump or the blower may supply air to the diffuser 450 through the pipe 510.

As shown in FIG. 3, the immersion type membrane separation device 100 according to the embodiment of the invention may further include a valve 530 connected to the pipe 510 between the diffuser 450 and the supply part 520. The valve 530 may be positioned to the outside of the aeration tank in the same manner as the supply part 520. When the immersion type membrane separation device 100 drives, the valve 530 may discharge air filled in the pipe 510 to the outside.

A method for driving the immersion type membrane separation device 100 having the above-described structure is described below.

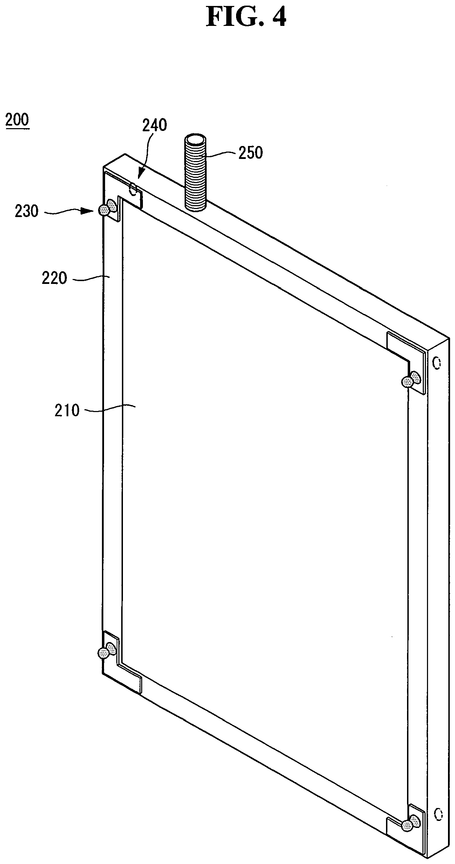

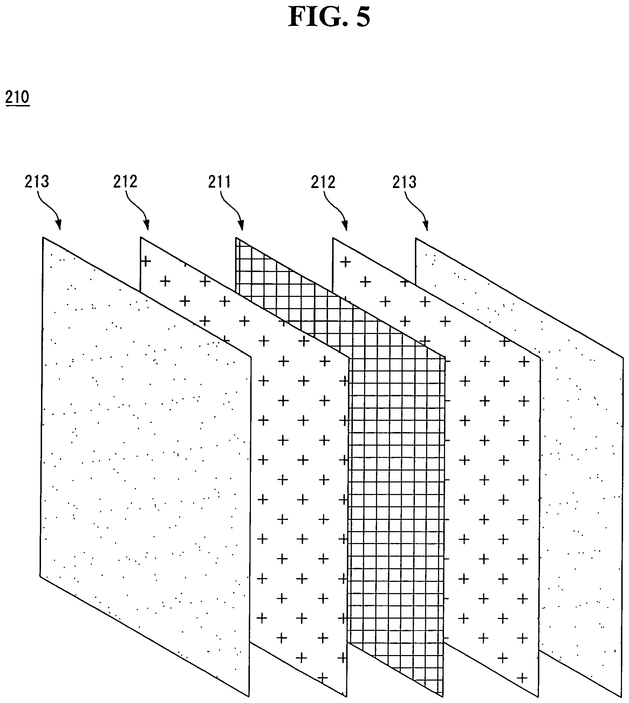

FIG. 4 illustrates the membrane module 200 according to the embodiment of the invention. FIG. 5 illustrates a membrane part of the membrane module 200.

As shown in FIGs. 4 and 5, the membrane module 200 includes a membrane part
210, a frame 220 for fixing the membrane part 210, and a discharge unit 250. The membrane part 210 may include a supporter 211, nonwoven fabrics 212 respectively positioned on both surfaces of the supporter 211, and membranes 213 respectively positioned on the nonwoven fabrics 212.

The supporter 211 may be a thin plate. The supporter 211 may be fixed to the frame 220 and may fix the nonwoven fabrics 212 and the membranes 213 on the nonwoven fabrics 212.

The nonwoven fabrics 212 may be positioned between the supporter 211 and the membranes 213, thereby separating the supporter 211 from the membranes 213. When the nonwoven fabrics 212 are respectively positioned on both surfaces of the supporter 211, spaces are provided between the both surfaces of the supporter 211 and the nonwoven fabrics 212. The spaces may serve as a path for fluid flow.

A plurality of pipe-shaped fluid paths may be formed between the supporter 211 and the nonwoven fabrics 212. The both surfaces of the supporter 211 may be perforated to have a plurality of fluid holes. Accordingly, the fluid passing through the membranes 213 and the nonwoven fabrics 212 flows into the fluid holes of the supporter 211 along the pipe-shaped fluid paths between the supporter 211 and the nonwoven fabrics 212 and then is discharged to the outside through the discharge unit 250.

Fine holes are uniformly formed on the entire surface of each of the membranes 213, so that only a liquid and a solid having the size equal to or less than a predetermined size pass through the membranes 213. In the embodiment of the invention, each of the membranes 213 may have fine holes each having the size equal to or less than 0.1 µm.

The frame 220 forms edges of the membrane modules 200. The discharge unit 250 is formed on a top end of the frame 220. The discharge unit 250 is used to discharge the fluid inside the fluid paths to the outside and is connected to the fluid paths. The suction tubes 290 are connected to a discharge pump of the discharge unit 250.

Each of the membrane modules 200 may include a plurality of protrusions 230 positioned on one surface of each membrane module 200 and a plurality of grooves 240 positioned on the other surface of each membrane module 200. The plurality of protrusions 230 may be respectively fitted into the plurality of grooves 240.

The protrusions 230 and the grooves 240 may be positioned on the frame 220 of each membrane module 200. Preferably, the protrusions 230 and the grooves 240 may be positioned at four edges of the frame 220. The protrusions 230 and the grooves 240 may be positioned at other locations of the frame 220. For example, the protrusions 230 and the grooves 240 may be positioned at two upper edges or two lower edges of the frame 220.

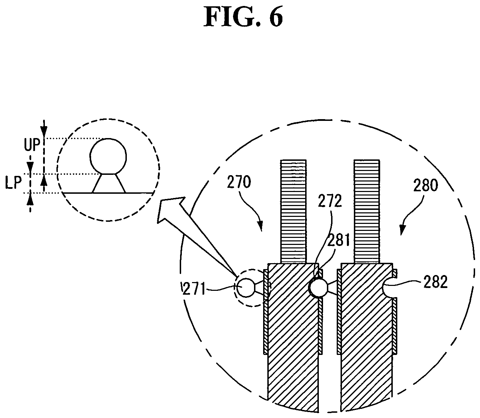

FIG. 6 illustrates an engaged form of the protrusions 230 and the grooves 240 of the membrane module 200.

As shown in FIG. 6, a first membrane module 270 and a second membrane module 280 are combined with each other.

The first membrane module 270 and the second membrane module 280 each have protrusions 271 and 281 and grooves 272 and 282. The protrusion 281 of the second membrane module 280 are inserted into the groove 272 of the first membrane module 270,
and thus the first membrane module 270 and the second membrane module 280 may be combined with each other.

More specifically, the groove 272 of the first membrane module 270 has a shape capable of receiving the protrusion 281 of the second membrane module 280. The groove 272 has a narrow inlet, but the narrow inlet is resilient. Therefore, after the protrusion 281 of the second membrane module 280 is inserted into the groove 272 of the first membrane module 270, a predetermined strength is necessary to separate the first membrane module 270 from the second membrane module 280.

A width of an end portion UP of the protrusion 230 may be greater than a width of a base portion LP of the protrusion 230. The end portion UP of the protrusion 230 has a sphere shape, and the base portion LP of the
protrusion 230 may have a downwardly inclined
surface. For example, as shown in FIG 6, the protrusion 230 may have a tumbler shape having a flat bottom surface.

The grooves 240 have a shape capable of being fitted into the protrusions 230, and thus the protrusions 230 may be inserted into the grooves 240. In other words, the grooves 240 may have a reverse shape of the shape of the protrusions 230, and thus may be engaged with the protrusions 230.

Because the first membrane module 270 has the protrusions 271 and the grooves 272 at its four edges and the second membrane module 280 has the protrusions 281 and the grooves 282 at its four edges, the first membrane module 270 and the second membrane module 280 may be reliably combined with each other.

The embodiment of the invention illustrates the protrusions and the grooves positioned at four edges of each membrane module. However, other locations of each membrane module corresponding to a formation area of the frame may be used for the protrusions and the grooves.

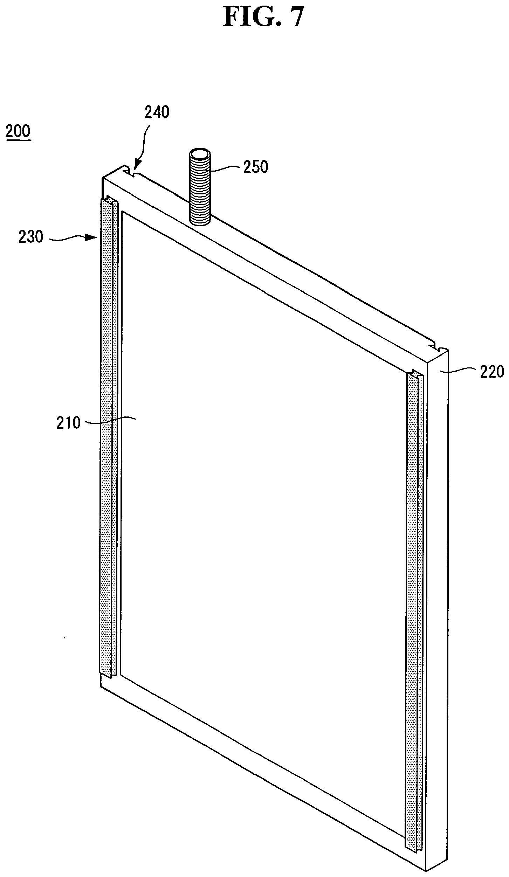

FIG. 7 illustrates another membrane module not in accordance with the invention. A description of configuration and components identical or equivalent to the membrane module described above may be briefly made or may be entirely omitted in FIG 7.

As shown in FIG. 7, a membrane module 200 includes a membrane part 210, a frame 220 for fixing the membrane part 210, and a discharge unit 250. The membrane module 200 includes protrusions 230 and grooves 240 formed on the frame 220.

The protrusions 230 may be positioned on the frame 220 in one surface of the membrane module 200, and more particularly may be respectively positioned on the left and right sides of the frame 220 along a longitudinal direction of the frame 220 in one surface of the membrane module 200. The grooves 240 may be respectively positioned on the left and right sides of the frame 220 along a longitudinal direction of the frame 220 in one surface of the membrane module 200. The grooves 240 may be respectively positioned on the left and right sides of the frame 220 corresponding to locations of the protrusions 230 in the other surface of the membrane module 200.

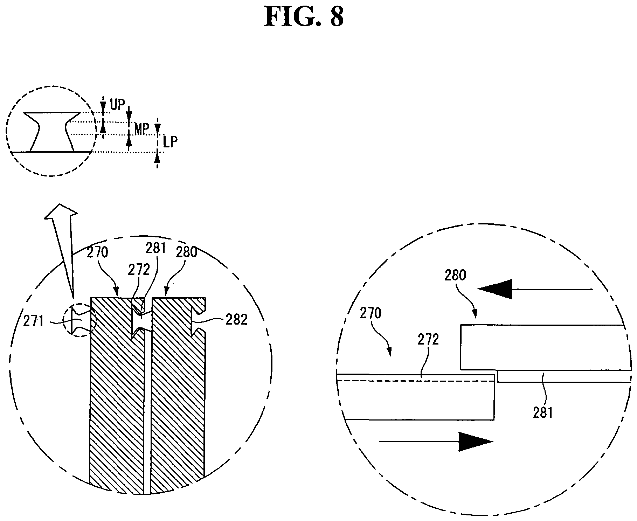

FIG. 8 illustrates an engaged form of the protrusions 230 and the grooves 240 of the membrane module 200 shown in FIG. 7.

As shown in FIG. 8, a first membrane module 270 and a second membrane module 280 are combined with each other.

The first membrane module 270 and the second membrane module 280 each have protrusions 271 and 281 and grooves 272 and 282. The protrusion 281 of the second membrane module 280 is inserted into the groove 272 of the first membrane module 270, and thus the first membrane module 270 and the second membrane module 280 may be combined with each other.

More specifically, the groove 272 of the first membrane module 270 may have a shape capable of receiving the protrusion 281 of the second membrane module 280. In FIGs. 7 and 8, the first membrane module 270 and the second membrane module 280 may be combined with each other in a sliding manner. In other words, the protrusion 281 of the second membrane module 280 is formed at a location corresponding to the groove 272 of the first membrane module 270. Thus, the first membrane module 270 and the second membrane module 280 may be combined with each other by sliding the protrusion 281 of the second membrane module 280 into the groove 272 of the first membrane module 270.

In fig. 8, a width of a middle part MP of the protrusion 230 may be less than a width of an end portion UP of the protrusion 230, and a width of a base portion LP equal to or greater than a width of the middle part MP of the protrusion 230 may have a downwardly inclined triangle shape. For example, as shown in FIG. 8, the protrusion 230 may have a hourglass-shaped section.

The grooves 240 may have a shape capable of being fitted into the protrusions 230, and thus the protrusions 230 may be inserted into the grooves 240. In other words, the grooves 240 may have a reverse shape of the shape of the protrusions 230, and thus may be engaged with the protrusions 230.

Accordingly, because the protrusions 271 and 281 and the grooves 272 and 282 are positioned on the left and right sides of each of the first and second membrane modules 270 and 280, the first membrane module 270 and the second membrane module 280 may be reliably combined with each other.

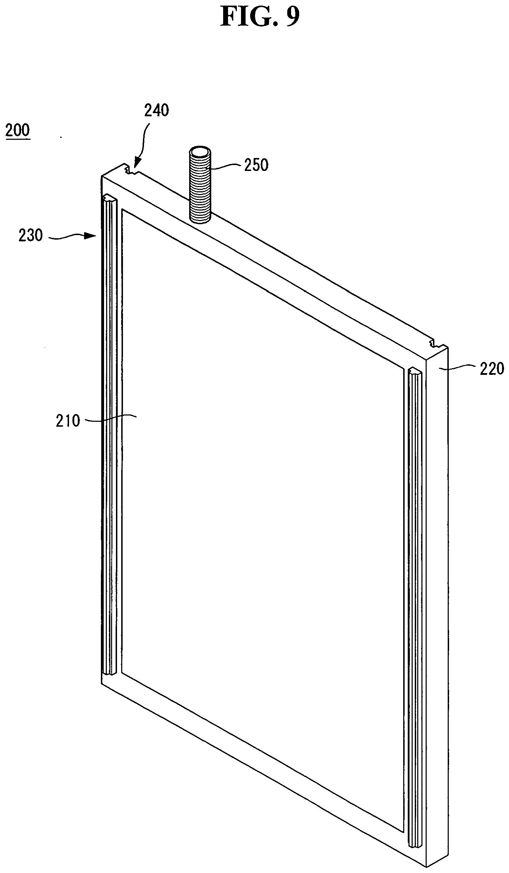

FIG. 9 illustrates another membrane not in accordance with the invention. A description of configuration and components identical or equivalent to the membrane module described above may be briefly made or may be entirely omitted in FIG 9.

As shown in FIG. 9, a membrane module 200 according to the exemplary embodiment of the invention includes a membrane part 210, a frame 220 for fixing the membrane part 210, and a discharge unit 250. The membrane module 200 includes protrusions 230 and grooves 240 formed on the frame 220.

The protrusions 230 may be positioned on the frame 220 in one surface of the membrane module 200, and more particularly may be respectively positioned on the left and right sides of the frame 220 along a longitudinal direction of the frame 220 in one surface of the membrane module 200. The grooves 240 may be respectively positioned on the left and right sides of the frame 220 corresponding to locations of the protrusions 230 in the other surface of the membrane module 200.

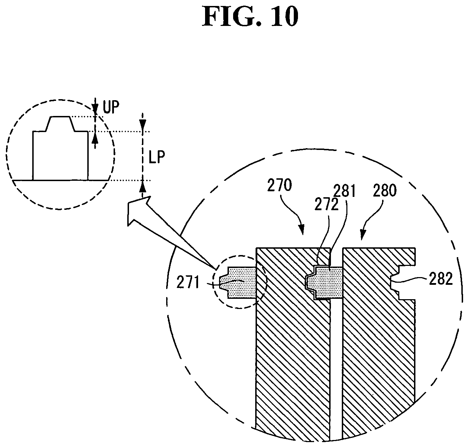

FIG. 10 illustrates an engaged form of the protrusions 230 and the grooves 240 of the membrane module 200 shown in FIG. 9.

As shown in FIG. 10, a first membrane module 270 and a second membrane module 280 are combined with each other.

The first membrane module 270 and the second membrane module 280 each have protrusions 271 and 281 and grooves 272 and 282. The protrusion 281 of the second membrane module 280 is inserted into the groove 272 of the first membrane module 270, and thus the first membrane module 270 and the second membrane module 280 may be combined with each other.

More specifically, the groove 272 of the first membrane module 270 has a shape capable of receiving the protrusion 281 of the second membrane module 280. In FIGs. 9 and 10, the first membrane module 270 and the second membrane module 280 may be combined with each other in a stacking manner. In other words, the protrusion 281 of the second membrane module 280 is formed at a location corresponding to the groove 272 of the first membrane module 270. Thus, the first membrane module 270 and the second membrane module 280 may be combined with each other by stacking the groove 272 of the first membrane module 270 and the protrusion 281 of the second membrane module 280.

In FIG. 10, a width of an end portion UP of the protrusion 230 may be less than a width of a base portion LP of the protrusion 230, and the protrusion 230 may have a tiered pyramid-shaped section.

The grooves 240 may have a shape capable of being fitted into the protrusions 230, and thus the protrusions 230 may be inserted into the grooves 240. In other words, the grooves 240 may have a reverse shape of the shape of the protrusions 230, and thus may be engaged with the protrusions 230.

Accordingly, because the protrusions 271 and 281 and the grooves 272 and 282 are positioned on the left and right sides of each of the first and second membrane modules 270 and 280, the first membrane module 270 and the second membrane module 280 may be reliably combined with each other.

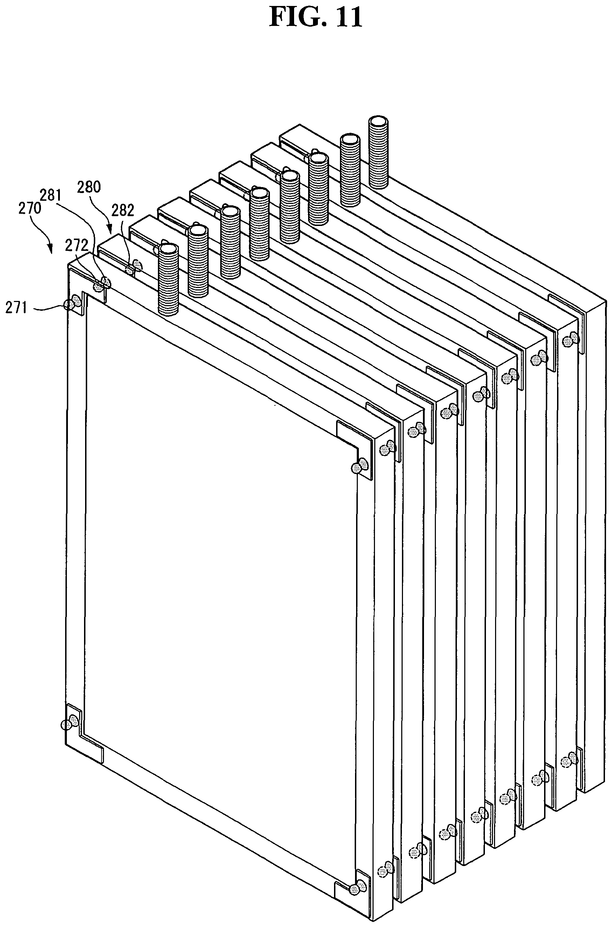

FIG. 11 illustrates an assembly of the plurality of membrane modules according to the exemplary embodiment of the invention.

As shown in FIG. 11, the plurality of membrane modules having the above-described configurations are combined with one another to form an assembly of the membrane modules. The plurality of membrane modules include a first membrane module 270 having protrusions 271 and grooves 272 and a second membrane module 280 having protrusions 281 and grooves 282. The grooves 272 of the first membrane module 270 and the protrusions 281 of the second membrane module 280 are engaged with each other.

As above, the combined membrane modules may be received in the membrane module case 300 of the immersion type membrane separation device 100 shown in FIG. 1.

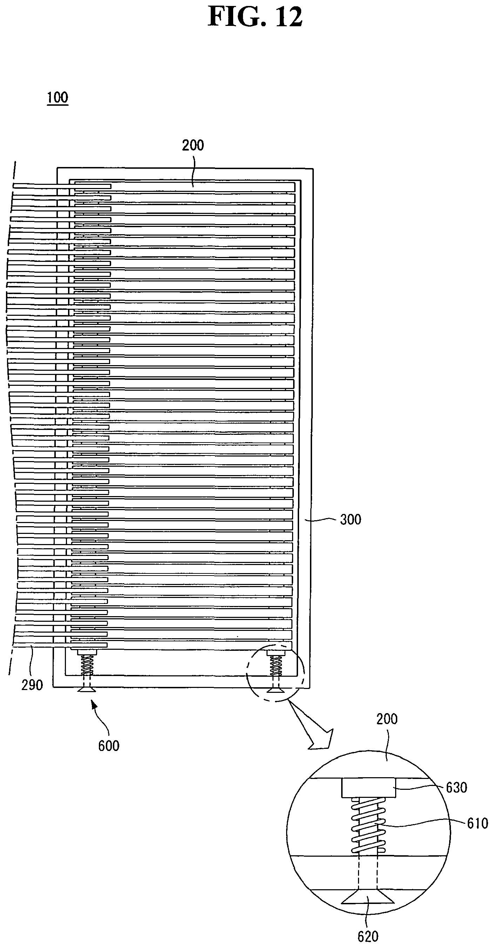

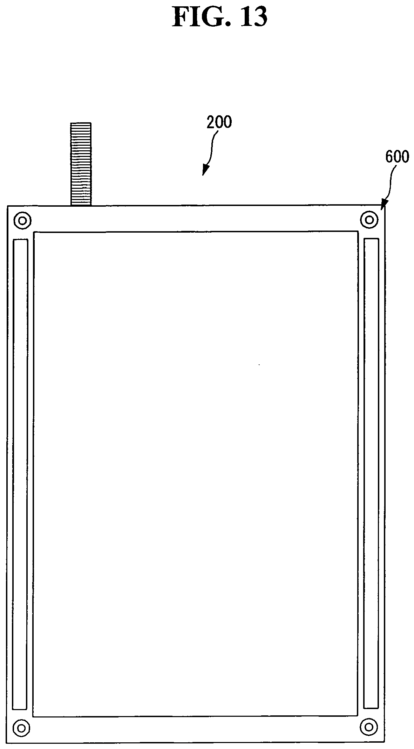

FIG. 12 is a top plane view of the immersion type membrane separation device 100 shown in FIG 1. FIG. 13 illustrates a combined form where the plurality of membrane modules are received in the membrane module case.

As shown in FIG. 12, the plurality of membrane modules 200 may be received in the membrane module case 300 of the immersion type membrane separation device 100.

The membrane module case 300 may have a plurality of spring members 600 for fixing and supporting the plurality of membrane modules 200. The spring members 600 may be positioned at one side of the membrane module case 300. Each of the spring members 600 may include a spring 610, a spring shaft 620 combined with the spring 610, and a supporter 630 that is positioned at an end of the spring shaft 620 and contacts the membrane modules 200. The spring 610 may be formed of an elastic material. The spring shaft 620 may be a supporting shaft for preventing the separation of the spring 610. The supporter 630 may transfer elasticity of the spring 610 to the membrane modules 200.

The spring members 600 may combine the plurality of membrane modules 200 with the membrane module case 300. In other words, the elasticity of the springs 610 positioned at one side of the membrane module case 300 may be applied to the membrane modules 200, thereby combing the membrane modules 200 with the membrane module case 300.

As shown in FIG. 13, at least four edges of each membrane module 200 may contact the spring members 600, so that the spring members 600 of the membrane module case 300 are reliably combined with the membrane modules 200. However, the spring members 600 may contact other portions of each membrane module 200.

Accordingly, in the immersion type membrane separation device 100 according to the exemplary embodiment of the invention, because the membrane module case 300 has the spring members 600 and combines the membrane modules 200 with one another using the spring members 600, the membrane module case 300 does not have a separate groove structure and a wall structure for combining the membrane modules 200 with one another.

A method for driving the immersion type membrane separation device 100 according to the exemplary embodiment of the invention is described below with reference to FIGs. 1 to 3.

As shown in FIGs. 1 to 3, the immersion type membrane separation device 100 includes the membrane module case 300 including the plurality of membrane modules 200, the diffuser case 400 that is positioned under the membrane module case 300 and includes the diffuser 450 having the plurality of air holes 430, and the supply unit 500 that is connected to the diffuser 450 and supplies air to the diffuser 450 through the pipe 510. The supply unit 500 includes the pipe 510 connected to the diffuser 450 and the supply part 520 supplying air to the pipe 510.

The immersion type membrane separation device 100 having the above-described configuration may be positioned in the aeration tank filled with a wastewater. A portion of the pipe 510 connected to the diffuser 450 and the supply part 520 may be positioned to the outside, so that a user can operate the supply unit 500.

When the immersion type membrane separation device 100 is immersed in the aeration tank filled with the wastewater, the immersion type membrane separation device 100 drives the supply unit 500 and allows the supply unit 500 to perform a diffusing operation for supplying air to the diffuser 450.

More specifically, the supply part 520 of the supply unit 500 operates and performs the diffusing operation for supplying air to the diffuser 450 through the pipe 510. When air is supplied to the diffuser 450, the wastewater in the aeration tank may be circulated while air bubbles move to the membrane module case 300 through the air holes 430 of the diffuser 450.

The membrane modules 200 clean the wastewater through the circulation of the wastewater, and then the cleaned water is discharged to the outside through the suction tubes 290 connected to the membrane modules 200. If such a clean operation of the wastewater is performed for several hours, the air holes 430 of the diffuser 450 may be heated. Hence, the air holes 430 may be damaged. Accordingly, the supply unit 500 stops driving, discharges air inside the pipe 510 to the outside, and allows the wastewater to flow into the pipe 510 for the damage prevention of the air holes 430.

More specifically, as shown in FIG 2, in the immersion type membrane separation device 100 not having a valve, air existing inside the pipe 510 is discharged to the outside by opening the supply part 520 of the supply unit 500. In other words, until a water pressure inside the aeration tank reaches an atmospheric pressure, the wastewater in the aeration tank flows to the pipe 510 through the air holes 430 of the diffuser 450. Thus, air inside the pipe 510 is discharged to the outside.

When the supply part 520 is a pump or a blower, if the supply part 520 stops the air supply and remains in an open state in the external atmosphere, the wastewater flows to the pipe 510 through the air holes 430 of the diffuser 450 because of a difference between a water pressure inside the aeration tank and an atmospheric pressure.

On the other hand, as shown in FIG 3, when the pipe 510 of the supply unit 500 has a valve 530, the wastewater existing inside the pipe 510 is discharged to the outside by opening the valve 530.

When the supply unit 500 stops driving, the air holes 430 heated during the diffusing operation are cooled. However, pollution substances existing inside the wastewater may be adsorbed to the air holes 430 during cooling of the air holes 430. Hence, the air holes 430 may frequently filled with the pollution substances. Thus, the supply unit 500 starts to drive again and performs a flushing operation discharging the wastewater existing in the pipe 510 to the outside through the diffuser 450.

More specifically, after the opened supply part 520 or the opened valve 530 is closed and a connection between the supply part 520 or the valve 530 and the outside is blocked, the supply part 520 again drives. When air is supplied to the diffuser 450 through the supply part 520 (i.e., the pump or the blower), the wastewater is discharged through the air holes 430 of the diffuser 450. Hence, the pollution substances adsorbed to the air holes 430 may be removed, and the pump or the blower not having the valve may be used. Further, the pump or the blower may supply air to the inside of the pipe 510, and at the same time, may discharge air inside the pipe 510. Thus, the pump or the blower not having the valve may be used.

Further, the supply unit 500 may perform the flushing operation for flushing the filled air holes 430 while discharging the wastewater existing in the pipe 510 to the air holes 430 of the diffuser 450.

Subsequently, when the supply unit 500 supplies air to the diffuser 450, the immersion type membrane separation device 100 may start to perform the clean operation of the wastewater again while circulating the wastewater in the aeration tank.

In other words, the immersion type membrane separation device 100 according to the exemplary embodiment of the invention simultaneously performs the diffusing operation and the flushing operation using one pipe 510. However, in a related art, a pipe for the diffusing operation and a pipe for the flushing operation are necessary. Hence, the manufacturing cost of the immersion type membrane separation device may be reduced, and productivity may be improved.

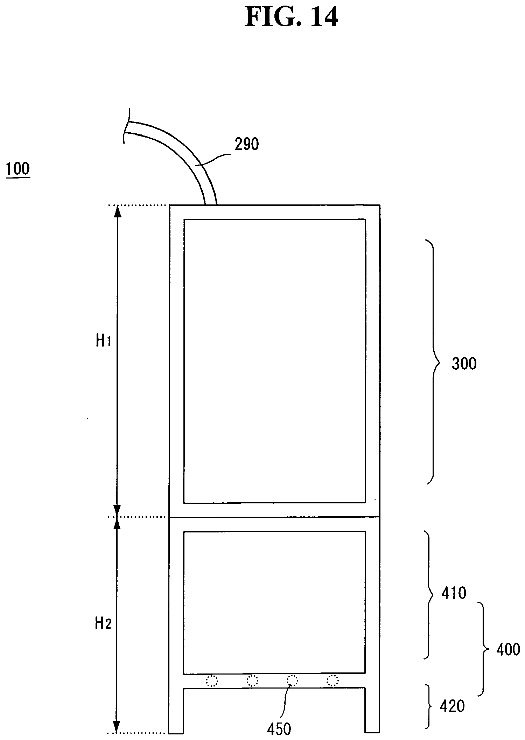

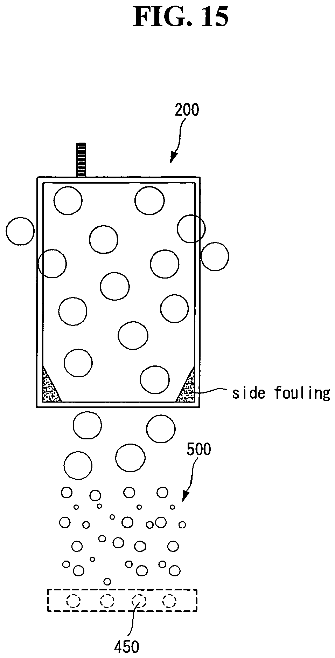

FIG. 14 is a front view of the immersion type membrane separation device according to the exemplary embodiment of the invention. FIG. 15 illustrates the membrane module and the diffuser.

As shown in FIGs. 14 and 15, the immersion type membrane separation device 100 may include the membrane module case 300 in which the plurality of membrane modules 200 are received, and the diffuser case 400 that is positioned under the membrane module case 300 and includes the cavity 410 and the legs 420. The diffuser case 400 may further include the diffuser 450 between the cavity 410 and the legs 420.

A height H₁ of the membrane module case 300 may be greater than a height H₂ of the diffuser case 400. The diffuser 450 upwardly discharges air and moves the wastewater to the membrane module case 300. Further, the surfaces of the membrane modules 200 is cleaned through air bubbles discharged from the diffuser 450.

If the height H₁ of the membrane module case 300 including the membrane modules 200 is less than the height H₂ of the diffuser case 400 including the diffuser 450, a distance between the membrane modules 200 and the diffuser 450 increases. Hence, the air bubbles discharged from the diffuser 450 move upwardly and are combined. As a result, lower edges of the membrane modules 200 are not cleaned because of an increase in the size of the air bubbles, and a side fouling phenomenon in which pollution substances remain in the membrane modules may occur.

The diffuser 450 may be always positioned at the same height as a bottom surface of the immersion type membrane separation device 100, so that the wastewater may flow from a lower part of the immersion type membrane separation device 100 and may be circulated. Thus, the height H₂ of the diffuser case 400 has to be adjusted so as to adjust the distance between the membrane modules 200 and the diffuser 450. Preferably, the height H₁ of the membrane module case 300 and the height H₂ of the diffuser case 400 may satisfy the following equation: 0.15 H₁ ≤ H₂ ≤ 0.98 H₁.

The following Table 1 indicates a generation degree of side fouling in the membrane modules measured when the immersion type membrane separation device according to the embodiment of the invention was installed in an aeration tank and cleaned a wastewater filled in the aeration tank. In the following Table 1, the height H₁ of the membrane module case 300 and the height H₂ of the diffuser case 400 were adjusted, and the immersion type membrane separation device operated for 30 minutes in each of ratios of H₁ : H₂. In the following Table 1, X represents that there is no side fouling, □ represents that the generation degree of side fouling is high, and ○ represents that the generation degree of side fouling is low.

**[Table 1]**

| H₁ : H₂ | Generation degree of side fouling |
|---|---|
| 1 : 0.1 | ○ |
| 1 : 0.15 | × |
| 1 : 0.2 | × |
| 1 : 0.25 | × |
| 1 : 0.3 | × |
| 1 : 0.4 | × |
| 1 : 0.5 | × |
| 1 : 0.6 | × |
| 1 : 0.7 | × |
| 1 : 0.8 | × |
| 1 : 0.9 | × |
| 1 : 0.98 | × |
| 1 : 0.99 | ○ |
| 1 : 1 | ⊚ |
| 1 : 1.1 | ⊚ |

As indicated in the above Table 1, when the height H₁ of the membrane module case 300 was greater than the height H₂ of the diffuser case 400, the generation degree of side fouling was low. In particular, when the height H₁ of the membrane module case 300 and the height H₂ of the diffuser case 400 satisfied the following equation: 0.15 H₁ ≤ H₂ ≤ 0.98 H₁, the side fouling was not generated. On the other hand, when the height H₁ of the membrane module case 300 was less than the height H₂ of the diffuser case 400, the generation degree of side fouling was high.

As above, the immersion type membrane separation device according to the embodiment of the invention may prevent the generation of side fouling in the membrane modules by adjusting the height H₁ of the membrane module case 300 and the height H₂ of the diffuser case 400.

Further, in the immersion type membrane separation device according to the embodiment of the invention, the membrane modules may be easily combined with one another. Because a combination frame is not used to combine the membrane modules with one another, the manufacturing cost and the size of the immersion type membrane separation device may be reduced. Hence, the efficiency of the immersion type membrane separation device may increase.

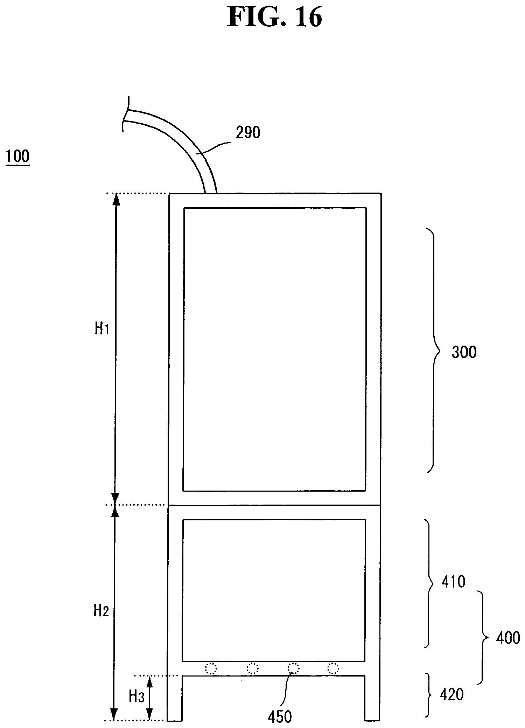

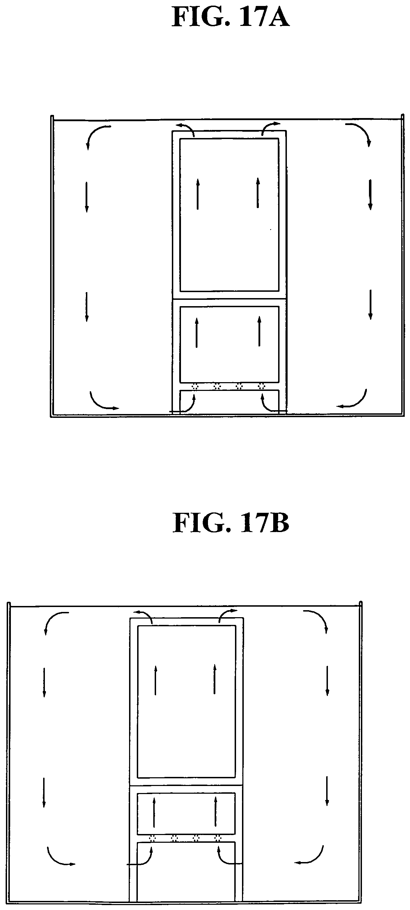

FIG. 16 is a lateral view of the immersion type membrane separation device according to the exemplary embodiment of the invention. FIGs. 17A and 17B illustrate a circulation of a wastewater in an aeration tank.

As shown in FIG. 16, the immersion type membrane separation device 100 according to the embodiment of the invention may include the membrane module case 300 and the diffuser case 400. The diffuser case 400 may include the cavity 410 including the diffuser 450 and the legs 420.

A height H₃ of each of the legs 420 may occupy 5 % to 30 % of a sum (H₁+H₂) of the height H₁ of the membrane module case 300 and the height H₂ of the diffuser case 400. The legs 420 may provide a space for safely positioning the immersion type membrane separation device 100 to the bottom and flowing the wastewater in the aeration tank to the inside of the legs 420.

Accordingly, when the height H₃ of each leg 420 is equal to or greater than 5 % of the sum (H₁+H₂) of the height H₁ of the membrane module case 300 and the height H₂ of the diffuser case 400, the size of the space for flowing the wastewater in the aeration tank to the inside of the legs 420 increases. Hence, the wastewater in the aeration tank may be smoothly circulated. As shown in FIG. 17A, the decay problems of the wastewater may be prevented through the entire circulation of the wastewater in the aeration tank.

Further, when the height H₃ of each leg 420 is equal to or less than 30 % of the sum (H₁+H₂) of the height H₁ of the membrane module case 300 and the height H₂ of the diffuser case 400, a position level of the diffuser 450 on the legs 420 rises because of an increase in the height H₃ of each leg 420. Accordingly, as shown in FIG. 17B, the circulation of the wastewater resulting from air supplied by the diffuser 450 may be performed in a bottom portion of the aeration tank. As a result, the wastewater remaining in the bottom portion of the aeration tank is cleaned, and sediment does not remain in the bottom portion of the aeration tank.

The following Table 2 indicates an amount of sediment to be remained in a bottom portion of an aeration tank when the immersion type membrane separation device according to the embodiment of the invention was installed in the aeration tank and cleaned a wastewater filled in the aeration tank. In the following Table 2, the height H₃ of each leg 420 was adjusted with respect to the sum (H₁+H₂) of the height H₁ of the membrane module case 300 and the height H₂ of the diffuser case 400, and the immersion type membrane separation device operated for 1 hour in each of ratios of (H₁+H₂) : H₃. In the following Table 2, ⊚ represents that a large amount of sediment was produced, and ○ represents that a small amount of sediment was produced.

**[Table 2]**

| (H₁+H₂) : H₃ (%) | Amount of sediment | Remarks |
|---|---|---|
| 100: 1 | ⊚ | Bad wastewater circulation |
| 100: 2 | ⊚ | Bad wastewater circulation |
| 100: 3 | ⊚ | Bad wastewater circulation |
| 100: 4 | ⊚ | Bad wastewater circulation |
| 100: 5 | ○ | · |
| 100: 6 | ○ | · |
| 100: 7 | ○ | · |
| 100: 10 | ○ | · |
| 100: 15 | ○ | · |
| 100: 20 | ○ | · |
| 100: 25 | ○ | · |
| 100: 27 | ○ | · |
| 100: 28 | ○ | · |
| 100: 29 | ○ | · |
| 100: 30 | ○ | · |
| 100: 31 | ⊚ | · |
| 100: 32 | ⊚ | · |
| 100: 33 | ⊚ | · |

As indicated in the above Table 2, when the height H₃ of each leg 420 is less than 5 % of the sum (H₁+H₂) of the height H₁ of the membrane module case 300 and the height H₂ of the diffuser case 400, a large amount of sediment was produced in the bottom portion of the aeration tank because the wastewater in the aeration tank is not smoothly circulated.

When the height H₃ of each leg 420 is 5 % to 30 % of the sum (H₁+H₂) of the height H₁ of the membrane module case 300 and the height H₂ of the diffuser case 400, a small amount of sediment was produced in the bottom portion of the aeration tank because the wastewater in the aeration tank is smoothly circulated.

When the height H₃ of each leg 420 is greater than 30 % of the sum (H₁+H₂) of the height H₁ of the membrane module case 300 and the height H₂ of the diffuser case 400, the wastewater in the aeration tank is not smoothly circulated because a position level of the diffuser 450 on the legs 420 excessively rises because of an increase in the height H₃ of each leg 420. Hence, a large amount of sediment was produced in the bottom portion of the aeration tank.

As described above, the immersion type membrane separation device according to the embodiment of the invention adjusts the height of the leg with respect to a sum of the height of the membrane module case and the height of the diffuser case, thereby smoothly circulating the wastewater in the aeration tank. Hence, the sediment may be prevented from being produced in the bottom portion of the aeration tank, and the cleaning efficiency may be improved.

Furthermore, because the membrane modules of the immersion type membrane separation device according to the embodiment of the invention are easily combined with one another, a combination frame is not used to combine the membrane modules with one another. Hence, the manufacturing cost and the size of the immersion type membrane separation device may be reduced. Hence, the efficiency of the immersion type membrane separation device may increase.

Furthermore, because the membrane module case has the spring members and the membrane modules are combined using the spring members, the membrane module case does not have a separate groove structure and a wall structure for combining the membrane modules with one another.

## Claims

1. An immersion type membrane separation device (100) comprising:
a membrane module case (300) including a plurality of membrane modules (200);
a diffuser case (400) positioned under the membrane module case (300), the diffuser case (400) including a diffuser (450); and
a supply unit (500) for supplying air to the diffuser (450), the supply unit (500) including a pipe (510) connected to the diffuser (450),
wherein air is supplied to the diffuser (450) through the pipe (510),
wherein the plurality of membrane modules (200) include a first membrane module (270) and a second membrane module (280),
each module including a membrane part (210)
and a frame (220) for fixing the membrane part 210,
wherein a plurality of protrusions (230; 271, 281) are positioned on one surface of each of the first and second membrane modules (270, 280), and a plurality of grooves (240; 272, 282) are positioned on the opposite surface of each of the first and
second membrane modules (270, 280),
wherein the plurality of protrusions (281) of one of the first and second membrane modules (280) are respectively fitted into the plurality of grooves (272) of the other of the first and second membrane modules (270), and thus the first and second membrane modules (270, 280) are combined with each other,
wherein the plurality of protrusions (230; 271, 281) and the plurality of grooves (240; 272, 282) are positioned on the frame (220) of each of the first and second
membrane modules (200; 270, 280), and
**characterised in that**
the base portion (LP) of each of the protrusions (230; 271, 281) has an inclined surface, and the end portion (UP) of each of the protrusions (230; 271, 281) has a sphere shape.

2. The immersion type membrane separation device (100) of claim 1, wherein the supply unit (500) includes a supply part (520) for air supply, the supply part (520) including a pump or a blower.

3. The immersion type membrane separation device of claim 2, wherein the supply unit (500) further includes a valve (530) connected to the pipe (510) between the diffuser (450) and the supply part (520), and
wherein when the immersion type membrane separation device (100) drives, the valve (530) discharges air filled in the pipe (510) to the outside.

4. The immersion type membrane separation device (100) of claim 1, wherein a width of a middle portion (MP) of each of the protrusions (230; 271, 281) is less than a width of an end portion (UP) of each of the protrusions (230; 271, 281).

5. The immersion type membrane separation device (100) of claim 1, wherein a width of an end portion (UP) of each of the protrusions (230; 271, 281) is less than a width of a base portion (LP) of each of the protrusions (230; 271, 281).

6. The immersion type membrane separation device (100) of claim 1, wherein the plurality of protrusions (230; 271, 281) are positioned in at least four edges of one surface of the frame of each of the first and second membrane modules (270, 280), and the plurality of grooves (240; 272, 282) are positioned in at least four edges of the other surface of the frame of each of the first and second membrane modules (270, 280).

## Patentansprüche

1. Membrantrennvorrichtung für den Tauchbetrieb (100), umfassend:
ein Membranmodulgehäuse (300) einschließlich einer Vielzahl von Membranmodulen (200);
ein unter dem Membranmodulgehäuse (300) angeordnetes Diffusorgehäuse (400) einschließlich eines Diffusors (450); und
eine Versorgungseinheit (500) einschließlich einer mit dem Diffusor (450) verbundenen Rohrleitung (510) zum Versorgen des Diffusors (450) mit Luft,
wobei der Diffusor (450) durch die Rohrleitung (510) mit Luft versorgt wird,
wobei die Vielzahl von Membranmodulen (200) ein erstes Membranmodul (270) und ein zweites Membranmodul (280) umfasst, wobei jedes Modul einen Membranabschnitt (210) und einen Rahmen (220) zum Befestigen des Membranabschnitts (210) umfasst,
wobei eine Vielzahl von Vorsprüngen (230; 271, 281) auf einer Oberfläche von jedem der ersten und zweiten Membranmodule (270, 280) angeordnet ist und eine Vielzahl von Nuten (240; 272, 282) auf der gegenüberliegenden Oberfläche von jedem der ersten und zweiten Membranmodule (270, 280) angeordnet ist,
wobei die Vielzahl von Vorsprüngen (281) von einem der ersten und zweiten Membranmodule (280) jeweils in die Vielzahl von Nuten (272) von dem anderen der ersten und zweiten Membranmodule (270) eingesetzt ist und die ersten und zweiten Membranmodule (270, 280) somit miteinander verbunden sind,
wobei die Vielzahl von Vorsprüngen (230; 271, 281) und die Vielzahl von Nuten (240; 272, 282) an dem Rahmen (220) von jedem der ersten und zweiten Membranmodule (200; 270, 280) angeordnet sind, und
**dadurch gekennzeichnet, dass**
der Basisabschnitt (LP) von jedem der Vorsprünge (230; 271, 281) eine geneigte Oberfläche hat und der Endabschnitt (UP) von jedem der Vorsprünge (230; 271, 281) eine Kugelform hat.

2. Membrantrennvorrichtung für den Tauchbetrieb (100) nach Anspruch 1, wobei die Versorgungseinheit (500) einen Versorgungsabschnitt (520) einschließlich einer Pumpe oder eines Gebläses zur Luftversorgung umfasst.

3. Membrantrennvorrichtung für den Tauchbetrieb nach Anspruch 2, wobei die Versorgungseinheit (500) weiterhin ein Ventil (530) umfasst, das zwischen dem Diffusor (450) und dem Versorgungsabschnitt (520) mit der Rohrleitung (510) verbunden ist, und
wobei, wenn die Membrantrennvorrichtung vom Eintauchtyp (100) betrieben wird, das Ventil (530) in die Rohrleitung (510) eingefüllte Luft nach außen ausstößt.

4. Membrantrennvorrichtung für den Tauchbetrieb (100) nach Anspruch 1, wobei eine Breite eines Mittelabschnitts (MP) von jedem der Vorsprünge (230; 271; 281) kleiner als eine Breite eines Endabschnitts (UP) von jedem der Vorsprünge (230; 271, 281) ist.

5. Membrantrennvorrichtung für den Tauchbetrieb (100) nach Anspruch 1, wobei eine Breite eines Endabschnitts (UP) von jedem der Vorsprünge (230; 271, 281) kleiner als eine Breite eines Basisabschnitts (LP) von jedem der Vorsprünge (230; 271, 281) ist.

6. Membrantrennvorrichtung für den Tauchbetrieb (100) nach Anspruch 1, wobei die Vielzahl von Vorsprüngen (230; 271, 281) in mindestens vier Rändern einer Oberfläche des Rahmens von jedem der ersten und zweiten Membranmodule (270, 280) angeordnet ist und die Vielzahl von Nuten (240; 272, 282) in mindestens vier Rändern der anderen Oberfläche des Rahmens von jedem der ersten und zweiten Membranmodule (270, 280) angeordnet ist.

## Revendications

1. Dispositif (100) de séparation de membranes de type à immersion comprenant :
un boîtier (300) de modules de membranes comprenant une pluralité de modules de membranes (200) ;
un boîtier (300) de diffuseur positionné sous le boîtier (300) de modules de membranes, le boîtier (400) de diffuseur incluant un diffuseur (450) ; et
une unité d'alimentation (500) destinée à délivrer de l'air vers le diffuseur (450), l'unité d'alimentation (500) incluant un tuyau (510) connecté au diffuseur (450),
dans lequel l'air est délivré vers le diffuseur (450) par l'intermédiaire du tuyau (510),
dans lequel la pluralité de modules de membranes (200) comprend un premier module de membrane (270) et un deuxième module de membrane (280), chaque module incluant une partie de membrane (210) et un cadre (220) destiné à fixer la partie de membrane (210),
dans lequel une pluralité de saillies (230 ; 271, 281) sont positionnées sur une surface de chacun parmi les premier et deuxième modules de membranes (270, 280), et une pluralité de rainures (240 ; 272, 282) sont positionnées sur la surface opposée de chacun parmi les premier et deuxième modules de membranes (270, 280),
dans lequel la pluralité de saillies (281) de l'un parmi les premier et deuxième modules de membranes (280) sont respectivement ajustées dans la pluralité de rainures (272) de l'autre parmi les premier et deuxième modules de membranes (270), et ainsi les premier et deuxième modules de membranes (270, 280) sont combinés l'un avec l'autre,
dans lequel la pluralité de saillies (230 ; 271, 281) et la pluralité de rainures (240 ; 272, 282) sont positionnées sur le cadre (220) de chacun parmi les premier et deuxième modules de membranes (200 ; 270, 280), et
**caractérisé en ce que**
la partie de base (LP) de chacune des saillies (230 ; 271, 281) possède une surface inclinée, et la partie d'extrémité (UP) de chacune des saillies (230 ; 271, 281) présente une forme sphérique.

2. Dispositif (100) de séparation de membranes de type à immersion selon la revendication 1, dans lequel l'unité d'alimentation (500) comprend une partie d'alimentation (520) pour l'alimentation en air, la partie d'alimentation (520) incluant une pompe ou un souffleur.

3. Dispositif de séparation de membranes de type à immersion selon la revendication 2, dans lequel l'unité d'alimentation (500) comprend en outre un clapet (530) connecté au tuyau (510) entre le diffuseur (450) et la partie d'alimentation (520), et
dans lequel lorsque le dispositif (100) de séparation de membranes de type à immersion fonctionne, le clapet (530) évacue l'air rempli dans le tuyau (510) vers l'extérieur.

4. Dispositif (100) de séparation de membranes de type à immersion selon la revendication 1, dans lequel une largeur d'une partie intermédiaire (MP) de chacune des saillies (230 ; 271, 281) est inférieure à une largeur d'une partie d'extrémité (UP) de chacune des saillies (230 ; 271, 281).

5. Dispositif (100) de séparation de membranes de type à immersion selon la revendication 1, dans lequel une largeur d'une partie d'extrémité (UP) de chacune des saillies (230 ; 271, 281) est inférieure à une largeur d'une partie de base (LP) de chacune des saillies (230 ; 271, 281).

6. Dispositif (100) de séparation de membranes de type à immersion selon la revendication 1, dans lequel la pluralité de saillies (230 ; 271, 281) sont positionnées dans au moins quatre bords d'une surface du cadre de chacun parmi les premier et deuxième modules de membranes (270, 280), et la pluralité de rainures (240 ; 272, 282) sont positionnées dans au moins quatre bords de l'autre surface du cadre de chacun parmi les premier et deuxième modules de membranes (270, 280).
